# EUROPEAN PATENT SPECIFICATION

(11) **EP 3 903 601 B1**
(45) Date of publication and mention of the grant of the patent: **20.04.2022**
(21) Application number: 20171571.1
(22) Date of filing: 27.04.2020
(51) Int. Cl.: A23C 20/02, A23C 11/10

(54) **METHODS OF PROCESSING CULINARY NUTS AND EXTRACTION PRODUCTS OBTAINED BY THE SAME**
VERFAHREN ZUR VERARBEITUNG VON NÜSSEN ZU SPEISEZWECKEN UND DARAUS ERHALTENE EXTRAKTIONSPRODUKTE
PROCÉDÉS DE TRAITEMENT DE NOIX ET PRODUITS D'EXTRACTION AINSI OBTENUS

(43) Date of publication of application: 03.11.2021
(73) Proprietor: Unico-first AG, 9000 St. Gallen (CH); Zürcher Hochschule Für Angewandte Wissenschaften, 8820 Wädenswil (CH)
(72) Inventor: LAUX, Roland, 9325 Roggwil (CH); HÜHN, Tilo, 8824 Schönenberg (CH)
(74) Representative: Grünecker Patent- und Rechtsanwälte PartG mbB

(56) References cited:
- WO-A1-2017/163178
- WO-A1-2019/020834
- CN-A- 101 280 327
- US-A1- 2016 338 389
- US-A1- 2020 015 492

## Description

### FIELD OF INVENTION

This invention relates to methods and/or techniques for the production of extracts on the basis of culinary nuts, which enable rapid, inexpensive, and improved extraction, as well as high yields of usable aromatic constituents and nutritionally beneficial components.

In certain embodiments, this invention relates to products obtained by making use of said culinary nut extracts.

### BACKGROUND OF THE INVENTION

In the recent years, there has been an increasing interest in the preparation of vegetable-based alternatives to dairy products (e.g. dairy milk and cheese) to address digestive problems (particularly lactose intolerance) or other health related problems, promote vegan nutrition or to mitigate environmental problems associated with extensive livestock farming. Especially plant-based milk analogues, such as soy based milk, rice milk, oat milk and nut-based milk, for example, enjoy a growing popularity.

In WO 2013/078510 A1, a process for the preparation of a nut-based milk analogue composition is disclosed, which includes the addition of dry ingredients to nuts or seeds as fat components in order match the nutritional profile of dairy milk.

GB 2 413 932 A discloses a method for making almond milk by diluting an almond paste prepared by mixing crushed or ground almond with raw cane sugar and a stabiliser.

AU 201720433 B2 proposes the preparation of nut butter, which may be mixed together with water in a specialized mixing device to provide emulsified nut milk. WO 2017/163178 A1 discloses a production method for hazelnut beverages, including a step of grinding natural hazelnut kernels and water together in a bladed grinder. CN 101280327 A describes a process of an enzymatic ultrasonic treatment of walnuts for the preparation of walnut oil and extraction of proteins and peptides. WO 2019/020834 A discloses an extraction process of animal-derived products including a three-phase separation step.

In EP 2 476 317 A1, a process of preparing almond drinks is disclosed, comprising subjecting almonds to a heat treatment, dry grinding and dispersion in an aqueous medium.

US 9,011,949 B2 discloses methods and compositions for the production of cheese replicas by enzymatic curdling of non-dairy milk, wherein the non-dairy milk is produced by coarsely decompounding nuts or plant seeds in a solution comprising water, followed by removal and discarding of insoluble solids to alleviate the grainy mouthfeel of the nut milk. On the other hand, US 2020/0015492 A1 and US 2016/0338389 A1 disclose methods of making non-dairy milk, which comprise decompounding a slurry comprising nuts and/or seeds, and fine-milling the decompounded slurry in a shear mill without subsequent separation of the insoluble solids.

However, conventional methods of preparing nut-based extracts (including non-dairy milk) often have the problem that it is difficult to simultaneously achieve favorable organoleptic properties, tasty appearance and high yields of nutritionally favorable components without a large number of processing steps, elaborate equipment and high production costs. Accordingly, it remains desirable to provide a method which consistently overcomes these disadvantages.

Moreover, recent studies indicate that the shell materials of numerous culinary nuts contain valuable dietary fibers and especially high amounts of antioxidants, such as polyphenols and flavonoids, which play an important role in the absorption or neutralisation of free radicals. For example, high antioxidant activity has been reported for shell materials of peanuts (B. Adhikari et al., Journal of the Saudi Society of Agricultural Sciences 2019, 18, 437-442), Pecan nuts (A. C. Pinheiro do Prado et al., Grasas Y Aceites 2009, 60(4), 330-335) and hazelnuts (T. Esposito etal., International Journal of Molecular Sciences 2017, 18, 392.). In conventional processing for food consumption, the shell and skin materials of nuts are often considered as undesired by-products and are discarded, which not only represents an economic problem for the producers but may also lead to a serious impact on the environment due to the combustion of residues.

Therefore, it would be desirable to provide a method which is capable of effectively processing in-shell culinary nuts to alleviate the aforementioned problems and simultaneously providing high yields of the bioactive materials present in the non-shelled nuts.

### SUMMARY OF THE INVENTION

The present invention solves this object with the subject matter of the claims as defined herein. The advantages of the present invention will be further explained in detail in the section below and further advantages will become apparent to the skilled artisan upon consideration of the invention disclosure.

Generally speaking, in one aspect the present invention provides a method for processing culinary nuts, comprising the steps of: a) adding water to non-shelled culinary nuts to form a suspension; b) wet grinding said suspension in one or more steps to an average particle size of less than 100 µm; and c) separating the suspension into at least a solid phase comprising culinary nut solids and a liquid phase comprising culinary nut milk, wherein the culinary nuts subjected to wet grinding include nuts selected from hazelnuts, almonds, walnuts, cashews, pistachios, pecans, macadamia nuts, peanuts, kola nuts, palm nuts, Brazil nuts, chestnuts, and combinations thereof. Advantageously, said method allows optimized extraction and yield of nutritionally beneficial components and provides a route to a variety of novel usable extracts and products, while enabling fast and inexpensive processing. Advantageously, the method comprises processing of non-shelled culinary nuts as starting materials, so that elaborate separation of shell and husk material in advance is omitted, which further simplifies the process and improves the yield of nutritionally useful components present in the shell.

In further aspects, the present invention relates to a culinary nut milk prepared by the aforementioned method, wherein the culinary nuts subjected to wet grinding in step b) consist of non-shelled culinary nuts, to a solid phase obtained by the aforementioned method, wherein the culinary nuts subjected to wet grinding in step b) consist of non-shelled culinary nuts, and to the use of the aforementioned solid phase or the aforementioned culinary nut milk in the preparation of edible culinary nut based products.

In other aspects, the present invention relates to a method, wherein the above step c) comprises separating the suspension into a solid phase comprising culinary nut solids, a water phase (heavy phase) comprising culinary nut milk, and a fat phase (light phase) comprising culinary nut oil, as well as a culinary nut oil extract obtained by said method, wherein the culinary nuts subjected to wet grinding in step b) consist of non-shelled culinary nuts.

### BRIEF DESCRIPTION OF THE DRAWINGS

FIG. 1 is a flow chart illustrating an exemplary method of processing culinary nuts to provide extracts such as milk, dried extracts, aromas and nut oils according to the present invention.
FIG. 2 schematically illustrates an exemplary method of preparing non-dairy yoghurt from the culinary nut milk according to the present invention.
FIG. 3 illustrates an exemplary method of preparing non-dairy yoghurt from the culinary nut milk of the present invention.

### DETAILED DESCRIPTION OF THE INVENTION

For a more complete understanding of the present invention, reference is now made to the following description of the illustrative embodiments thereof:

### Method of Processing Culinary Nuts

In a first embodiment, the present invention generally relates to a method for processing culinary nuts, comprising the steps of: a) adding water to non-shelled culinary nuts to form a suspension; b) wet grinding said suspension in one or more steps to an average particle size of less than 100 µm; and c) separating the suspension into at least a solid phase comprising culinary nut solids and a liquid phase comprising culinary nut milk, wherein the culinary nuts subjected to wet grinding include nuts selected from hazelnuts, almonds, walnuts, cashews, pistachios, pecans, macadamia nuts, peanuts, kola nuts, palm nuts, Brazil nuts, chestnuts, and combinations thereof

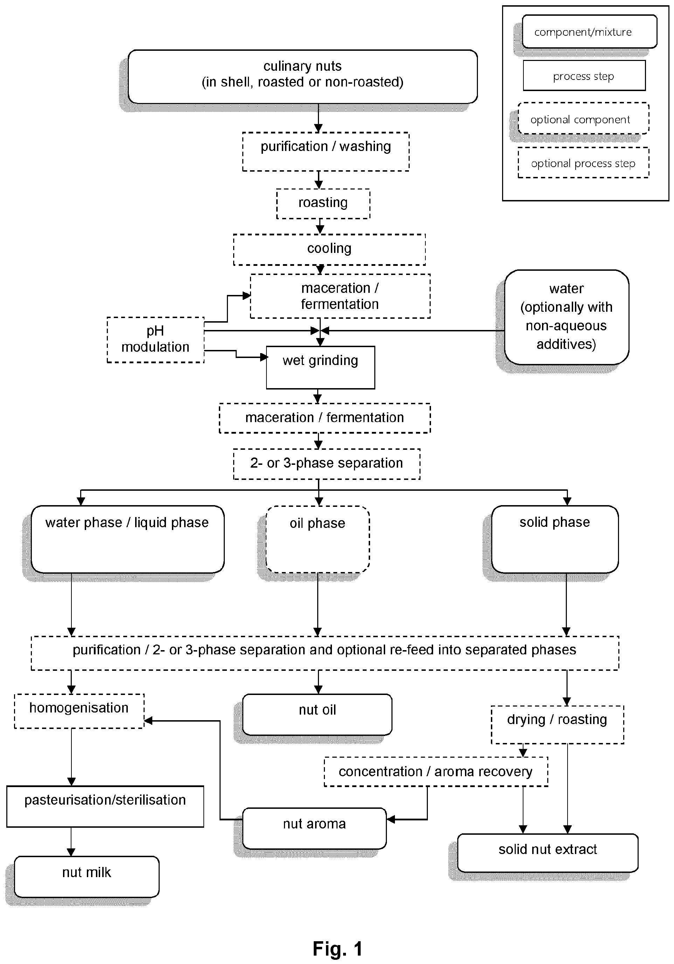

An exemplary embodiment of the above-defined method is illustrated in Fig. 1.

The term "culinary nut", as used herein, includes almonds, pecans, walnuts, cashews, pistachios, peanuts, kola nuts, palm nuts, hazelnuts, filberts, Brazil nuts, macadamia nuts, chestnuts, and mixtures thereof. In preferred embodiments, the term "culinary nut" comprises hazelnuts, almonds, walnuts, cashews, pistachios, pecans, macadamia nuts, peanuts, and combinations thereof. Before being subjected to step a), the culinary nuts may be pre-processed by sterilisation, blanching, shocking, washing and combinations thereof.

According to the present invention, the culinary nuts subjected to wet grinding in step b) consist of non-shelled culinary nuts in order to optimize the yield of antioxidants in the resultant extracts. In some embodiments, the culinary nuts may also be processed together with husk material, involucre and/or leaves, e.g. to extract additional biologically active components. The method of the present invention preferably further comprises a step of washing the non-shelled culinary nuts before step a), e.g. to remove residues of pesticides, fertilizers or other undesired foreign substances. The washing step may be carried out in a batch or continuous process according to methods known in the art. The processing of in-shell culinary nuts eliminates the need for specialized equipment and processing steps required for shell and separation. However, it does not only offer significant advantages over conventional methods in terms of processing efficiency and energy expenditure, but also makes ideal use of the beneficial bio-active components (e.g. antioxidants) found in the skin and the shell of the culinary nuts.

In step a), water is added to form a suspension. While not being particularly limited, the weight ratio of water to the culinary nuts in the formed suspension is preferably between 1:1 to 6:1, more preferably 2:1 to 4:1, especially preferably between 2.5:1 to 3.5:1, which may advantageously affect the processability in the further steps (e.g. facilitated pumping, grinding and/or easier phase separation). For the preparation of a non-dairy milk, the amount of water may be further fine-tuned in dependence of the fat content of the starting material and the desired fat content in the resulting milk.

While it may be preferred to use water (e.g. tap water) in step a), alternative water-containing liquids may also be used as a source of water in orderto introduce additional flavors, which may favorably interact with the primary and secondary flavors of the culinary nuts at subsequent stages of the processing methods. Such liquids may include liquids having water contents of from 60 to about 95 % by weight, such as fruit juices, fruit juice concentrates, or milk, for example. In case such water-containing liquids are used, it is generally preferable that the water content in the formed suspension falls into the above-defined ratios. In general, it is preferred that the added water or water-containing liquid has a temperature of 40°C or less, more preferably 30°C or less, and particularly preferably 25°C or less.

In embodiments, it may be preferable to modify the pH value of the water or water-containing liquid, for example by addition of one or more acids (e.g. acetic acid, citric acid, or the like) or buffers, preferably during or after step (1). Typically, said pH modulation may involve addition of buffer solution, base or acid in order to fine-tune the subsequent extraction profile.

In addition, carbohydrates may be added to the water or water-containing liquid, which may promote the efficient separation of the oil phase in the subsequent steps. While not being limited thereto, examples of suitable carbohydrates are mentioned in US 2018/0079991 A1.

Forming the aqueous suspension in step a), i.e. before step b) has the advantage that solid material is softened prior to grinding and the cooling effect of water further minimizes the mechanical burden on milling equipment. In addition, no drying step is required before wet grinding, which may be especially advantageous in view of the relatively low energy expenditure.

The methods and devices used for wet grinding in step b) are not particularly limited as long as significant frictional heat production or high mechanical forces are avoided in order to preserve the heat-sensitive components of the culinary nuts. For this purpose, step b) preferably comprises: (b1) one or more coarse grinding step(s) to an average particle size of 500 µm or less, and (b2) a subsequent fine grinding step to an average particle size of less than 100 µm, preferably less than 90 µm, even more preferably 80 µm or less, such as from 0.5 to 50 µm or from 1 to 20 µm. Reducing the particles to the above size ranges range substantially increases the exposed surface area of the particle material for optimized wetting, which enables improved extraction results (such as improved extraction of fats or lipids, aromatic substances, and/or polyphenols). The particle size reduction may be accomplished by using disc mills (e.g. perforated disc mill), colloid mills (e.g. toothed colloid mills), ball mills or corundum stone mills, for example. In a particularly preferred embodiment, the one or more coarse grinding step(s) (b1) are performed with a perforated disc mill, and the fine grinding step (b2) is performed by use of a toothed colloid mill and/or a ball mill.

In preferred embodiments, the method of the present invention comprises a step of subjecting the suspension to a maceration and/or fermentation step, preferably before or directly after step c), further preferably during or after wet-grinding in step b). Advantageously, such processes may be performed to reduce excessive contents of undesirable components of the culinary nuts, such as phytic acid, for example.

Maceration enables the aqueous extraction agent to additionally wet the solid material through enlargement of the surface area. In preferred embodiment, maceration may be performed enzymatically.

Fermentation may be performed by using microbial starter cultures, including indigenous and non-indigenous bacterial and yeast species known in the art, optionally in combination with enzymatic treatment, while the end point of fermentation may be monitored by chemical measurement of pH, which enables favorable control over the fermentation process when compared to natural, spontaneous fermentation.

It will be understood that the wording "fermentation", as used herein, may encompass spontaneous or controlled (non-spontaneous) fermentation processes. For example, an incubation step in an incubation medium may be implemented to simulate microbial (i.e. yeast and bacterial) fermentation. Although not being particularly limited as long as the concentration of incubation medium is sufficiently high to prevent spontaneous fermentation by endogenous microbes, the concentration of ethanol in the incubation medium may be from 1 to 20 vol.-%, preferably between 1 and 12 vol.-%. In an especially preferred embodiment from the viewpoint of germination inhibition efficiency and processing costs, the concentration of ethanol in the incubation medium is at least 2 vol.-% and less than 7 vol.-%. The incubation medium may further comprise enzymes known in the art for controlled enzyme-catalyzed reactions in order to facilitate formation of aroma precursors, such as hydrophilic oligopeptides and hydrophobic free amino acids, for example. If applied, the incubation may be carried out in a single step or in multiple incubation steps, wherein different incubation conditions and/or incubation media are employed. As will be known to the skilled artisan, the incubation conditions, such as pH or temperature, may be varied within one single incubation step. The incubation step may further encompass one or more mechanical and/or physical treatment steps commonly known in the art before or during the incubation. Although not being limited thereto, such a mechanical treatment may comprise stirring, mixing and agitating, and combinations thereof, while said physical treatment may comprise an infrared treatment and/or a vacuum treatment, for example.

In step c), the finely ground suspension is subjected to one or more separation and/or processing steps comprising at least the separation into a solid phase comprising culinary nut solids and a liquid phase comprising culinary nut milk. It has been surprisingly found that when the suspension is finely wet ground according to step b), the following separation of the solid phase does not negatively impact the aromatic richness of the culinary nut milk. In addition, since sedimentation of solid particles is avoided, the appearance and mouthfeel of the culinary nut milk may be substantially improved. Accordingly, compared to methods known in the art which do not employ separation of solids from the liquid phase, the method of the present invention provides a solid phase which may be advantageously used for a number of products and extracts (examples of which will be mentioned below) without compromising the rich aroma of the culinary nut milk. In fact, the resulting culinary nut milk exhibits improved appearance and organoleptic properties.

Preferably, devices employing centrifugal forces may be utilized to achieve mechanical particle separations, such as decanters or nozzle separators, while decanters are particularly preferred.

For some applications, it may be preferred that step c) comprises a three-phase separation, wherein the suspension is separated into a solid phase comprising culinary nut solids, a water phase (heavy phase) comprising culinary nut milk, and a fat phase (light phase) comprising culinary nut oil. For example, such a process is desirable if gentle extraction of nut oils (without the necessity of carbohydrate addition or pressing steps) is desired and/or if it is desired to minimize the fat content in the culinary nut milk without compromising the flavor richness (as would be the case by dilution, for example). Although a three-phase separation may be achieved by subsequent steps, for instance, by de-oiling the liquid phase obtained in step c) to produce culinary nut milk, it is preferred to conduct three-phase separation in a single step, e.g. by a three-phase decanter.

A three-phase separation further offers the possibility of removing undesirable lipophilic components via the oil phase. Examples of such undesirable components include, but are not limited to lipophilic allergens or toxic substances. For instance, cashew nut shells include cashew shell oil (also known as cashew nutshell liquid (CNSL)), which is undesirable in food preparation as it exhibits strongly allergenic properties and causes eye irritation, skin rashes, and burning sensations upon contact with human skin. Separation of cashew shell oil through the oil phase provides a pathway to edible cashew fruit extracts, while the shell oil itself may be further processed to provide a raw material in the preparation of drugs, antioxidants, fungicides, and biomaterials, for example.

Multiple phase separation and recombination steps may be employed to achieve an improved separation between the liquid phase(s) and the solid phase. The thus obtained purified phases may be re-fed to the respective phases obtained after the first separation stage.

For example, the water and oil phases obtained in the three-phase separation may be further purified, e.g. by performing a second three-phase separation step, in order to further improve the recovery and yield of extracts. The solid phase may filtered or centrifuged to separate remaining water, which may be recombined with the water phase from the initial decanting step or at a later processing stage of said phases. Also, the water phase may be subjected to further purification steps, e.g. by filtration using vacuum rotation filters in order to remove fine particles.

In a preferred embodiment, steps a) to c) are carried out continuously in a time frame of less than 100 minutes, preferably less than 60 minutes, more preferably less than 20 minutes, which represents a remarkable improvement over conventional techniques.

Although a heat treatment may be incorporated at several stages of the processing method, it is preferred that each of the processing steps a) to c) are performed at temperatures in the range of 0°C to 65°C in order to preserve high contents of heat-sensitive materials. For instance, for the preparation of nut oils with especially high contents of nutritionally beneficial bioactive materials (such as heat-sensitive polyphenols, flavonoids or vitamins), it is however, preferred that the culinary nuts are not roasted before step a) and that the suspension temperature during step c) does not exceed 40°C, and is preferably less than 35°C, more preferably less than 30°C, and especially preferably 25°C or less, such as 20°C or less.

In a preferred embodiment, the method may also comprise a step of subjecting the suspension during or after step b) to a heat treatment at a temperature of 60°C or less (e.g. at a temperature of 40 to 60°C) in order to further enhance the extraction efficiency in the subsequent steps.

A heating step may also be implemented to introduce roast flavors. For example, the culinary nuts may be roasted before mixing with water in step a), which may advantageously also be performed with culinary nuts in shell. While not being limited thereto, typical roasting temperatures will be generally in the range of more than 65°C and 200 °C or less, preferably between 70 and 160°C, such as from 80 to 150°C.

If it is desired to introduce roast flavors into the solid phase comprising culinary nut solids obtained after step c) without effect on the liquid phase, the solid phase after step c) may be roasted alone, preferably during a drying procedure.

For example, (wet) solid phase obtained after phase separation in step c) may be optionally treated with a heatable roll grinder to reduce particle size and begin pre-drying. The solid phase may be subjected to a drying step and an optional subsequent roasting step to obtain (roasted) culinary nut powder and culinary nut aroma. Also, sugar, sugar solution and/or fruit juices or the like may optionally be added to separated solids before drying to improve flavor development during the drying/roasting process. It will be understood that the obtained culinary nut aroma may be collected and used independently (as aroma extract) or directly reintroduced into the other extracts, including the liquid/water phase comprising culinary nut milk for a more intense taste.

The method of carrying out the drying/roasting is not particularly limited and may e.g. be accomplished in a drum dryer. In a preferred embodiment, however, the drying/roasting step is carried out in a mixing device comprising a cylindrical, tubular body arranged with its axis horizontal and closed at its opposite ends by end plates, and having a coaxial heating or cooling jacket through which, for example, diathermic oil or another fluid is intended to flow to keep the internal wall of the body at a predetermined temperature. The tubular body has an inlet and outlet openings for the solid phase. The outlet opening communicates, by means of a duct, with a device for separating the aroma phase from the dried product. The device further comprises a bladed rotor is supported for rotation in the tubular body, its blades being arranged as a helix and oriented for centrifuging the solid phase being processed and simultaneously transporting it towards the outlet opening. Using this mixing device advantageously allows the drying/roasting step and the separation of the roasted flavors and other aromatics to be carried out continuously up to the preparation of the culinary nut powder. The temperature in the optional roasting step is not particularly limited and may be suitably selected by the skilled artisan in dependence of the selected culinary nuts and the desired flavors and/or antioxidant activity in the final product, for example. Typically, the roasting step is followed by a cooling step, which may be carried out by air cooling or by addition of cold liquid (e. g. water), for example. If roasting is performed before a maceration or fermentation step, the cooling step may be preferably carried out with the use of a cold liquid which is adapted to adjust the pH, enzymatic and/or microbial content to conditions optimized for maceration or fermentation, respectively, which advantageously reduces the number of necessary process steps.

The above-described methods enable simple, rapid and inexpensive preparation of culinary nut extracts, which make ideal use of the naturally present, nutritionally beneficial components.

### Processing of Culinary Nut Extracts and Related Products

The culinary nut extracts obtained by the above-described methods may be directly employed as food products (as food additives, nutritional supplements or beverages, for example). In addition, culinary nut oil extracts may also be used in cosmetic products (e.g. in lotions), health-care products (including natural health-care products), and combinations of the latter (topical preparations, etc.).

Specifically, a second embodiment of the present invention relates to a culinary nut milk produced by optionally homogenising and subsequently pasteurising or sterilising the liquid phase (in case of a two-phase separation) or the water phase (in case of a three phase separation) obtained by the method according to the first embodiment.

For the preparation of culinary nut milk, the liquid phase or water phase (in case of a three-phase separation) may be optionally homogenised and subsequently pasteurised or sterilised to provide a ready-to-serve culinary nut milk with favorable appearance and high contents of preserved natural flavors, vitamins and antioxidants.

During homogenisation, the dimension of the fat droplets is reduced, which increases the perception of creaminess and the product stability by decreasing the rate of fat agglomeration. Homogenisation may be brought about by methods known in the art, and typically includes forcing the heated pasteurized mass through an orifice under high pressure, typically between 120 and 2100 bar. Ultra high pressure (UHP) homogenisation with pressures of between 1400 and 2100 bar is preferable as it enables the provision of emulsions with a large number of very small fat droplets (diameters of less than 0.5 µm) and requires lower fat content to achieve the sensory and stability properties compared a product homogenized at lower pressures.

A pasteurisation or sterilisation step may be carried out according to methods known in the art to prevent microorganism spoilage/propagation, e.g. by application of heat, irradiation, chemical sterilisation, and micro-, ultra- or nanofiltration, for example. The pasteurisation process may be carried out in batch or continuous operation, e.g. by the use of HTST (high temperature short time) heat exchangers.

A third embodiment of the present invention relates to the solid phase or the culinary nut milk according to the second embodiment or obtained by the method according to the first embodiment described above, wherein in each of the methods, the culinary nuts subjected to wet grinding in step b) consist of non-shelled culinary nuts; as well as the use of said solid phase and/or said culinary nut milk in the preparation of edible culinary nut based products.

For instance, the (optionally dried) solid phase may be used as a culinary nut extract for further processing into numerous food products (including, but not limited to candy, protein bars, confectionery applications, bakery applications, instant powders, for use in cereals, as spread or ice creams) or pressed into shapes with different texture (including a recomposition of the culinary nut shape, for example). Moreover, the solid phase may be processed into a (gluten-free) flour for bakery applications (sweet or salty pastry and bread baking). Further processing steps may include, but are not limited to, pasteurisation, sterilisation, extrusion, instantisation, or the like.

For certain applications, such as the preparation of culinary nut-based ice creams, the wet solid phase may be processed without drying. For example, the wet solid phase may be directly added to a mixture comprising a natural or artificial sweetener, and subjected to pasteurisation, homogenisation and freezing to obtain a culinary nut-based frozen dessert. To this mixture, one or more dairy milk products (comprising milk fat, milk solids non-fat (MSNF) and/or yoghurt), vegetable milk products (including the culinary nut milk obtained from the liquid phase according to the present invention), egg products (e.g. egg yolk) emulsifiers and stabilizers may also be optionally added in suitable amounts to prepare a variety of nut-flavored hard frozen ice cream products, low-fat ice cream products, light ice cream products, soft-frozen ice cream products, sherbets, sorbets, and frozen yoghurts.

Examples of edible culinary nut based products also include various non-dairy products, such as non-dairy instant milk powders, non-dairy yoghurts or non-dairy cheese, produced by further processing of the culinary nut milk according to the second embodiment of the present invention.

An instant non-dairy milk powder may be obtained by instantising the culinary nut milk by methods known in the art, examples of which include, but are not limited to agglomeration techniques such as steam agglomeration, fluidized bed agglomeration, freeze drying agglomeration, thermal agglomeration or spray drying, for example.

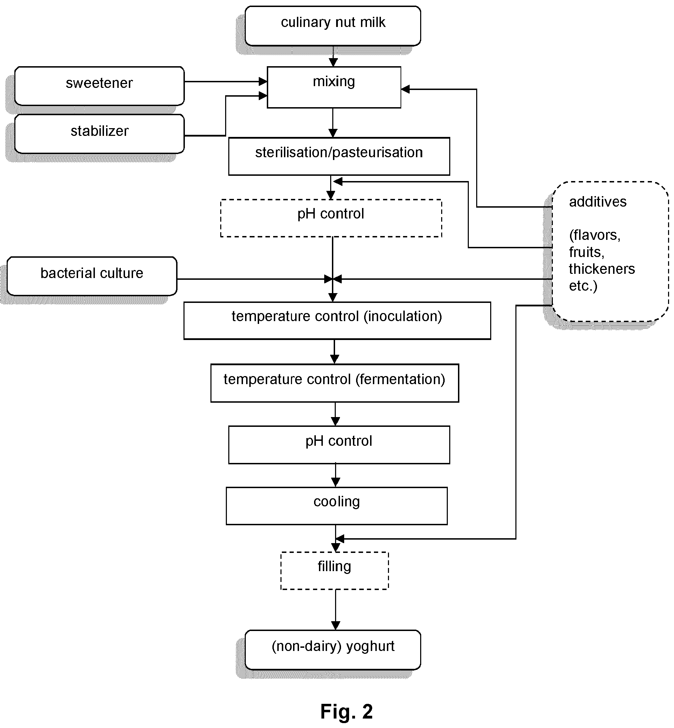

An exemplary method for the preparation of non-dairy yoghurt is illustrated in Fig. 2 and may include the steps of: mixing of a sweetener (e.g. sugar) and stabilizer in water; adding the above-described culinary nut milk to the mixture; pasteurising the mixture including the culinary nut milk at elevated temperatures; adding a suitable bacterial culture to the pasteurized mixture at inoculating temperature (e.g., in a range of 42 to 44°C); controlling the fermentation process by adjusting the temperature conditions (e.g. to a range of 42 to 45°C), monitoring the pH of the mixture and cooling the mixture when a target pH (e.g. in the range of from 4.2 to 4.7) has been reached to stop fermentation. The thus obtained yoghurt may then be optionally further cooled (e.g. to temperatures of 3 to 7 °C), flavored and filled. Additives such as fruits, thickeners, colorants, natural and/or artificial flavors, herbs, spices, preservatives, tricalcium phosphate, live active cultures, and proteins (e.g. plant-based), or the like, may be added to the mixture at different stages of the process or preferably to the yoghurt.

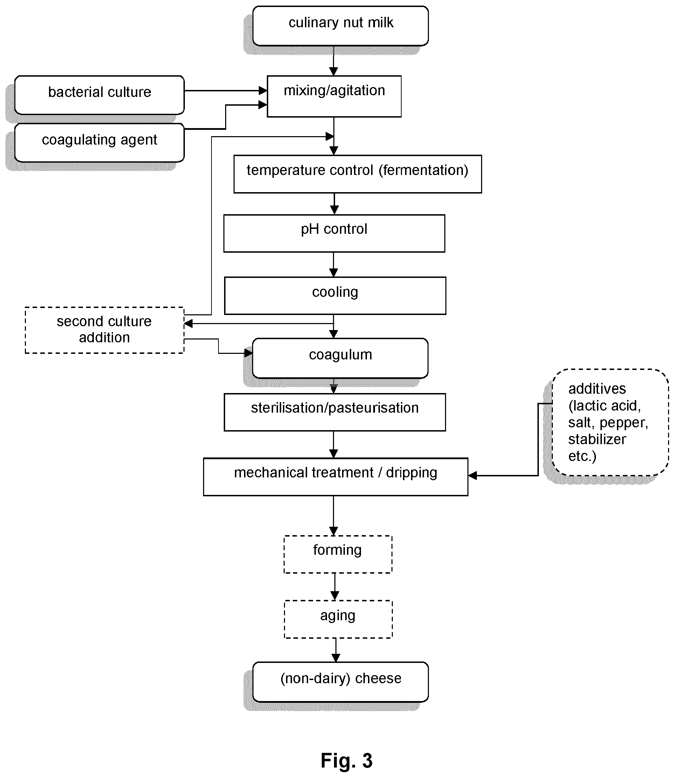

Fig. 3 schematically illustrates an exemplary method for producing a non-dairy cheese. The process generally starts with mixing of one or more bacterial cultures and a coagulating agent with culinary nut milk and gentle agitation of the mixture (preferably at a temperature of 15 to 20°C). The then initiated fermentation process is controlled by adjusting the temperature conditions (e.g. to a range of 42 to 45°C), monitoring the pH of the mixture and cooling the mixture (e.g., to about 20 to 25°C) when a target pH (e.g. in the range of from 4.2 to 4.7) has been reached to stop fermentation. The thus produced coagulum can be pasteurized and cooled (e.g., to about 20 to 25°C), if necessary, and may be optionally repopulated with one or more cultures. The resulting curd can be subjected to mechanical processing steps known in the art, including pressing, dripping methods (e.g., by placing the curd into a draining bag), mixing, chopping, or the like, in order to achieve the desired viscosity, density and smoothness. During this process, water and additives, such as lactic acid, salt, pepper, stabilizer, for example, may be added. Subsequently, the cheese may be aged to the desired ripeness according to methods known in the art. As with the preparation of the non-dairy yoghurt, suitable bacterial cultures may be appropriately selected by the skilled artisan.

A fourth embodiment of the present invention relates to a culinary nut oil extract, which is obtained from the oil phase during the optional three-phase separation in step c) described in conjunction with the first embodiment, wherein the culinary nuts subjected to wet grinding in step b) consist of non-shelled culinary nuts. The oil phase may be optionally further purified and concentrated to provide a culinary nut oil with high contents of nutritionally beneficial lipophilic components. Alternatively, the nut oil extract may be used for non-food applications, such as the preparation cosmetic products, health-care products, drugs, antioxidants, and microbicides, for example.

### EXAMPLES

Three types of hazelnut milk have been prepared according to the method of the present invention, by mixing hazelnuts with demineralized and sterile filtrated water in a weight ratio of 1:3 (i.e. 25 kg hazelnuts and 75 kg water), coarse-grinding the aqueous suspension in a perforated disc mill (FrymaKoruma ML 150) and fine-grinding the coarse slurry with a toothed colloid mill (FrymaKoruma MZ 130; milling gap 0.1 mm). Upon fine grinding, the suspension was subjected to a phase separation with a decanter centrifuge (GEA Westfalia). The water phase obtained from phase separation was subjected to sterilisation at 120°C for 55 seconds using a tubular heat exchanger. In each case, the total extraction time from the mixing step a) to the preparation of the sterilized hazelnut milk was approximately 10 minutes or less. The solid phase obtained in the phase separation step has been dried at 65°C at a reduced pressure of 30 mbar for approximately 8 hours. In Example 1, washed whole hazelnuts (i.e. in shell) have been used as starting material, resulting in 43 kg of hazelnut milk. Reference Example 2 has been performed by use of washed non-blanched hazelnut kernels, while blanched hazelnut kernels have been used as starting material in Reference Example 3. In both Reference Examples 2 and 3, the process yielded 74 kg of hazelnut milk.

The taste of the hazelnut milk obtained in Example 1 and Reference Examples 2 and 3 was evaluated and an aromatically rich and pleasant taste was attributed to each of the samples.

The starting materials and the obtained nut milk and dried solid extracts have been analyzed with respect to the dry matter content, fat content and pH. The results of the analysis are shown in Table 1 below.

**TABLE 1**

| | | Dry matter content [%] | Fat content [%] | Fat content per dry matter [%] | pH |
|---|---|---|---|---|---|
| Example 1 | Whole hazelnuts | 90.70 | 32.72 | 36.07 | - |
| | Hazelnut milk | 5.00 | 2.63 | 52.60 | 6.52 |
| | Dried solids | 98.65 | 39.10 | 39.64 | - |
| Reference Example 2 | Hazelnut kernels (non-blanched) | 94.70 | 54.85 | 57.92 | - |
| | Hazelnut milk | 19.40 | 6.08 | 31.34 | 6.48 |
| | Dried solids | 98.85 | 45.04 | 45.56 | - |
| Reference Example 3 | Hazelnut kernels (blanched) | 94.85 | 54.85 | 57.83 | - |
| | Hazelnut milk | 25.26 | 7.27 | 28.78 | 6.51 |
| | Dried solids | 98.26 | 39.02 | 39.71 | - |

The above analysis indicates that, after two phase separation, the majority of the fat content remains in the solid phase, while the extraction efficiency is similar in all examples. The fat content of the milk obtained in Example 1 indicates that in case of whole hazelnuts, a nut to water ratio of 1:3 is suitable to achieve fat contents similar to conventional dairy milk.

In view of the above, it is shown that the present invention provides a simple and particularly rapid and cost-efficient process for the preparation of culinary nut extracts.

## Claims

1. A method for processing culinary nuts, comprising the steps of:
a) adding water to non-shelled culinary nuts to form a suspension;
b) wet grinding said suspension in one or more steps to an average particle size of less than 100 µm; and
c) separating the suspension into at least a solid phase comprising culinary nut solids and a liquid phase comprising culinary nut milk,
wherein the culinary nuts subjected to wet grinding include nuts selected from hazelnuts, almonds, walnuts, cashews, pistachios, pecans, macadamia nuts, peanuts, kola nuts, palm nuts, Brazil nuts, chestnuts, and combinations thereof.

2. The method according to claim 1, wherein the culinary nuts subjected to wet grinding include nuts selected from hazelnuts, almonds, walnuts, cashews, pistachios, pecans, macadamia nuts, peanuts, and combinations thereof.

3. The method according to any one of claims 1 or 2, wherein the method further comprises a step of washing the non-shelled culinary nuts before step a).

4. The method according to claim 3, wherein the non-shelled culinary nuts subjected to wet grinding include non-shelled hazelnuts.

5. The method according to any one of claims 1 to 4, wherein step b) is performed by use of a toothed colloid mill and/or a ball mill.

6. The method according to any one of claims 1 to 5, wherein the culinary nuts are non-roasted before being subjected to step a) and each of the processing steps a) to c) are performed at temperatures in the range of 0°C to 65°C, preferably in the range of 0 to 40°C.

7. The method according to any one of claims 1 to 5, further comprising a step of roasting the culinary nuts before step a), preferably at a temperature of more than 65°C and 200°C or less, further preferably between 80 and 160°C.

8. The method according to any one of claims 1 to 5, further comprising a step of roasting the the solid phase comprising culinary nut solids after step c), preferably at a temperature of more than 65°C and 200°C or less, further preferably between 80 and 160°C.

9. The method according to any one of claims 1 to 8, further comprising a step of subjecting the suspension to a maceration or fermentation step before step c).

10. The method according to any one of claims 1 to 9, wherein steps a) to c) are carried out continuously in a time frame of less than 100 minutes, preferably less than 60 minutes, more preferably less than 20 minutes.

11. The method according to any one of claims 1 to 10, wherein step c) comprises separating the suspension into a solid phase comprising culinary nut solids, a water phase (heavy phase) comprising culinary nut milk, and a fat phase (light phase) comprising culinary nut oil.

12. The method according to claim 1, further comprising a step of sterilising the liquid phase, or the method according to claim 11, further comprising a step of pasteurising or sterilising the water phase, to provide culinary nut milk.

13. Culinary nut milk prepared by the method according to claim 12, wherein the culinary nuts subjected to wet grinding in step b) consist of non-shelled culinary nuts.

14. Solid phase obtained by a method according to any one of claims 1 to 11, wherein the culinary nuts subjected to wet grinding in step b) consist of non-shelled culinary nuts.

15. Culinary nut oil extract obtained by a method according to claim 11, wherein the culinary nuts subjected to wet grinding in step b) consist of non-shelled culinary nuts.

16. Use of the culinary nut milk according to claim 13 or the solid phase according to claim 14 in the preparation of edible culinary nut-based products.

## Patentansprüche

1. Verfahren zum Verarbeiten von Speisenüssen, umfassend die Schritte:
a) Zugabe von Wasser zu ungeschälten Speisenüssen, um eine Suspension zu bilden;
b) Naßvermahlen der Suspension in einem oder mehreren Schritten auf eine durchschnittliche Teilchengröße von weniger als 100 µm; und
c) Trennen der Suspension in mindestens eine feste Phase, die Nussfeststoffe umfasst, und eine flüssige Phase, die Speisenussmilch umfasst,
wobei die der Nassvermahlung unterworfenen Speisenüsse Nüsse ausgewählt aus Haselnüssen, Mandeln, Walnüssen, Cashewnüssen, Pistazien, Pekannüssen, Macadamianüssen, Erdnüssen, Kolanüssen, Palmnüssen, Paranüssen, Kastanien und Kombinationen davon umfassen.

2. Verfahren nach Anspruch 1, wobei die der Nassvermahlung unterworfenen Speisenüsse Nüsse ausgewählt aus Haselnüssen, Mandeln, Walnüssen, Cashewnüssen, Pistazien, Pekannüssen, Macadamianüssen, Erdnüssen und Kombinationen davon umfassen.

3. Verfahren nach einem der Ansprüche 1 oder 2, wobei das Verfahren ferner einen Schritt des Waschens der ungeschälten Speisenüsse vor Schritt a) umfasst.

4. Verfahren nach Anspruch 3, wobei die der Nassvermahlung unterworfenen Speisenüsse ungeschälte Haselnüsse umfassen.

5. Verfahren nach einem der Ansprüche 1 bis 4, wobei Schritt b) unter Verwendung einer Zahnkolloidmühle und/oder einer Kugelmühle durchgeführt wird.

6. Verfahren nach einem der Ansprüche 1 bis 5, wobei die Speisenüsse nicht geröstet werden, bevor sie Schritt a) unterworfen werden, und jeder der Verarbeitungsschritte a) bis c) bei Temperaturen im Bereich von 0°C bis 65°C durchgeführt wird, vorzugsweise im Bereich von 0 bis 40°C.

7. Verfahren nach einem der Ansprüche 1 bis 5, ferner umfassend einen Schritt des Röstens der Speisenüsse vor Schritt a), vorzugsweise bei einer Temperatur von mehr als 65°C und 200°C oder weniger, ferner bevorzugt zwischen 80 und 160°C.

8. Verfahren nach einem der Ansprüche 1 bis 5, ferner umfassend einen Schritt des Röstens der festen Phase, die kulinarische Nussfeststoffe umfasst, nach Schritt c), vorzugsweise bei einer Temperatur von mehr als 65°C und 200°C oder weniger, weiter bevorzugt zwischen 80 und 160°C.

9. Verfahren nach einem der Ansprüche 1 bis 8, wobei die Suspension vor Schritt c) ferner einem Mazerations- oder Fermentationsschritt unterworfen wird.

10. Verfahren nach einem der Ansprüche 1 bis 9, wobei die Schritte a) bis c) kontinuierlich in einem Zeitrahmen von weniger als 100 Minuten, vorzugsweise weniger als 60 Minuten, ferner bevorzugt weniger als 20 Minuten durchgeführt werden.

11. Verfahren nach einem der Ansprüche 1 bis 10, wobei Schritt c) das Auftrennen der Suspension in eine feste Phase, die Speisenussfeststoffe beinhaltet, eine Wasserphase (schwere Phase), die Speisenussmilch beinhaltet, und eine Fettphase (leichte Phase), die Speisenussöl beinhaltet, umfasst.

12. Verfahren nach Anspruch 1, ferner umfassend einen Schritt des Sterilisierens der flüssigen Phase, oder Verfahren nach Anspruch 11, ferner umfassend einen Schritt des Pasteurisierens oder Sterilisierens der Wasserphase, um Speisenussmilch bereitzustellen.

13. Speisenussmilch, hergestellt nach dem Verfahren gemäß Anspruch 12, wobei die der Nassvermahlung unterworfenen Speisenüsse in Schritt b) aus ungeschälten Speisenüssen bestehen.

14. Feste Phase, erhalten durch ein Verfahren nach einem der Ansprüche 1 bis 11, wobei die der Nassvermahlung unterworfenen Speisenüsse in Schritt b) aus ungeschälten Speisenüssen bestehen.

15. Speisenussölextrakt, erhalten durch ein Verfahren nach Anspruch 11, wobei die der Nassvermahlung unterworfenen Speisenüsse in Schritt b) aus ungeschälten Speisenüssen bestehen.

16. Verwendung der Speisenussmilch nach Anspruch 13 oder der festen Phase nach Anspruch 14 bei der Herstellung von essbaren Produkten auf Speisenussbasis.

## Revendications

1. Procédé de transformation de noix culinaires, comprenant les étapes de :
a) addition d'eau à des noix culinaires non décortiquées pour former une suspension ;
b) broyage à l'état humide de ladite suspension en une ou plusieurs étapes jusqu'à une taille moyenne de particule inférieure à 100 µm ; et
c) séparation de la suspension en au moins une phase solide comprenant les matières solides de noix culinaires et une phase liquide comprenant du lait de noix culinaires,
les noix culinaires soumises au broyage à l'état humide comprenant les noix sélectionnées parmi les noisettes, les amandes, les noix, les noix de cajou, les pistaches, les noix de pécan, les noix de macadamia, les arachides, les noix de cola, les noix de palme, les noix du Brésil, les châtaignes, et leurs combinaisons.

2. Procédé selon la revendication 1, les noix culinaires soumises au broyage à l'état humide comprenant les noix sélectionnées parmi les noisettes, les amandes, les noix, les noix de cajou, les pistaches, les noix de pécan, les noix de macadamia, les arachides, et leurs combinaisons.

3. Procédé selon l'une quelconque des revendications 1 ou 2, le procédé comprenant en outre une étape de lavage des noix culinaires non décortiquées avant l'étape a) .

4. Procédé selon la revendication 3, les noix culinaires non décortiquées soumises au broyage à l'état humide comprenant des noisettes non décortiquées.

5. Procédé selon l'une quelconque des revendications 1 à 4, l'étape b) étant effectuée par l'utilisation d'un broyeur colloïdal à dents et/ou d'un broyeur à boulets.

6. Procédé selon l'une quelconque des revendications 1 à 5, les noix culinaires étant non toastées avant d'être soumises à l'étape a) et chacune des étapes de transformation a) à c) étant effectuée à des températures situées dans la plage de 0°C à 65°C, préférablement dans la plage de 0 à 40°C.

7. Procédé selon l'une quelconque des revendications 1 à 5, comprenant en outre une étape de toastage des noix culinaires avant l'étape a), préférablement à une température de plus de 65°C et de 200°C ou moins, préférablement en outre entre 80 et 160°C.

8. Procédé selon l'une quelconque des revendications 1 à 5, comprenant en outre une étape de toastage de la phase solide comprenant les matières solides de noix culinaires après l'étape c), préférablement à une température de plus de 65°C et de 200°C ou moins, préférablement en outre entre 80 et 160°C.

9. Procédé selon l'une quelconque des revendications 1 à 8, comprenant en outre une étape de soumission de la suspension à une étape de macération ou de fermentation avant l'étape c).

10. Procédé selon l'une quelconque des revendications 1 à 9, les étapes a) à c) étant conduites de manière continuelle dans un cadre de temps inférieur à 100 minutes, préférablement inférieur à 60 minutes, plus préférablement inférieur à 20 minutes.

11. Procédé selon l'une quelconque des revendications 1 à 10, l'étape c) comprenant la séparation de la suspension en une phase solide comprenant les matières solides de noix culinaires, une phase aqueuse (phase lourde) comprenant du lait de noix culinaires, et une phase grasse (phase légère) comprenant de l'huile de noix culinaires.

12. Procédé selon la revendication 1, comprenant en outre une étape de stérilisation de la phase liquide, ou procédé selon la revendication 11, comprenant en outre une étape de pasteurisation ou de stérilisation de la phase aqueuse, pour fournir du lait de noix culinaires.

13. Lait de noix culinaires préparé par le procédé selon la revendication 12, les noix culinaires soumises au broyage à l'état humide dans l'étape b) étant constituées de noix culinaires non décortiquées.

14. Phase solide obtenue par un procédé selon l'une quelconque des revendications 1 à 11, les noix culinaires soumises au broyage à l'état humide dans l'étape b) étant constituées de noix culinaires non décortiquées.

15. Extrait d'huile de noix culinaires obtenu par un procédé selon la revendication 11, les noix culinaires soumises au broyage à l'état humide dans l'étape b) étant constituées de noix culinaires non décortiquées.

16. Utilisation du lait de noix culinaires selon la revendication 13 ou de la phase solide selon la revendication 14 dans la préparation de produits comestibles à base de noix culinaires.
